(19) Europäisches Patentamt
European Patent Office
Office européen des brevets

(11) Publication number: **0 146 574**
**B1**

(12) # EUROPEAN PATENT SPECIFICATION

(45) Date of publication of the patent specification: **17.12.86**

(51) Int. Cl.⁴: **F 24 F 11/04**

(21) Application number: **84902008.6**

(22) Date of filling: **17.05.84**

(86) International application number: **PCT/FI 84/00037**

(87) International publication number: **WO 84/04803 (06.12.84 Gazette 84/28)**

(54) **PROCEDURE AND MEANS FOR MAKING THE EFFECT OF GRAVITY THE SAME IN FLOW REGULATORS INDEPENDENT OF THE INSTALLATION MODE.**

(30) Priority: **20.05.83 FI 831801**

(43) Date of publication of application: **03.07.85 Bulletin 85/27**

(45) Publication of the grant of the patent: **17.12.86 Bulletin 86/51**

(84) Designated Contracting States: **AT BE CH DE FR GB LI NL SE**

(56) References cited:
**DE-A-2 448 271**
**DE-A-3 128 726**
**DE-B-2 635 338**
**FI-B-64 995**
**FR-A-2 392 302**
**FR-B-1 313 310**
**SE-B-48 558**
**SE-B-302 677**
**SE-B-400 391**
**US-A-1 281 645**
**US-A-1 766 876**

(73) Proprietor: **HALTON OY, SF- 47400 Kausala (FI)**

(72) Inventor: **AALTO, Erkki, Vatajantie 8 as 6, SF-47400 Kausala (FI)**
Inventor: **YLÄ- HEMMILÄ, Veikko, Laineentie 4 H, SF- 47400 Kausala (FI)**

(74) Representative: **Higgins, Michael Roger, MARKS & CLERK 57/60 Lincoln's Inn Fields, London WC2A 3LS (GB)**

**EP 0 146 574 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1986

## Description

The present invention relates to a method of setting a flow regulator for gaseous substances, particularly for air in air-conditioning and ventilation installations, for maintaining the volumetric flow rate of the gaseous substance at a desired magnitude with sufficient accuracy when the differential pressure (Δp) acting across the flow regulator varies within given limits, the flow regulator comprising an envelope and a regulating member turnable about an axis and disposed in a flow passage confined by the envelope, the regulating member turning progressively crosswise to the direction of flow with increasing differential pressure, and a weight for applying a countertorque to the regulating member which varies in accordance with the rotary position of the regulating member, whereby the torque produced by the gaseous substance on the regulating member and the countertorque cause the regulating member to assume an equilibrium position in which it provides the pressure drop required to maintain the volumetric flow at a predetermined magnitude.

The present invention also relates to a flow regulator for gaseous substances, particularly for air in air-conditioning and ventilation installations, for maintaining the volumetric flow rate of the gaseous substance at a desired magnitude with sufficient accuracy when the differential pressure (Δp) acting across the flow regulator varies within given limits, the flow regulator comprising an envelope and a regulating member turnably disposed in a flow passage confined by the envelope, the regulating member turning progressively crosswise to the direction of flow with increasing differential pressure, and further comprising a weight supported by a support member and applying a counter torque to the regulating member which varies with the position of the regulating member, whereby the torque produced by the gaseous substance on the regulating member and the countertorque cause the regulating member to assume an equilibrium position in which it provides the pressure drop required for maintaining the volumetric flow at a predetermined magnitude,

In prior art regulators, the countertorque is provided by a mass or weight or a spring, or a spring and bellows in combination. Each design has its advantages and disadvantages. Disadvantages connected with the use of springs are e.g. their relaxing, inaccuracies of manufacture, liability to suffer damage, etc. Disadvantages encountered when a weight is used for the countertorque are that the regulator can only be installed in a horizontal duct or passage, that the direction of flow (orientation) must be horizontal at all times and that the weight must always be on one and the same side of the passage. Advantages of a weight to provide the countertorque are, for instance, reliability in use, manufacturing accuracy, and permanence. Disadvantages of the use of springs combined with bellows are that the design is more liable to disturbances, is more expensive than a mere spring, and has a shorter life span.

GB-A-2 073 404 discloses a flow regulator of the type described above, with a countertorque weight. However, the flow regulator can only be installed in a horizontal orientation. If the flow regulator is installed in another orientation, the balance of torques on the regulating member is completely different and would cause inefficient or ineffective flow regulation, depending upon the orientation chosen. It is desirable to manufacture the flow regulator such that it can be installed in any orientaton (though normally the regulating member axis would be horizontal). By orientation is meant the direction of flow of the gaseous substance through the flow regulator, i.e horizontal or inclined to the horizontal.

The present invention provides a method as set forth in Claim 1 and a flow regulator as set forth in Claim 4.

Using the method of the invention, if one takes a standard installation as an installation with horizontal orientation (the flow passage or duct is horizontal) and wished to install the flow regulator at an orientation inclined to the horizontal by an angle $\alpha$, the countertorque weight is displaced from its standard position in relation to the regulating member, about the regulating member axis, by the angle $\alpha$ in the opposite direction.

The invention enables a weight (mass) to be used to provide the countertorque without the disadvantage of having always to install the flow regulator in a predetermined orientation. Thus the flow regulator may be installed in a passage or duct which extends in any direction, and the countertorque weight can be disposed on either side of the passage or duct. Normally, the regulating member axis will be horizontal, which can be facilitated by providing levelling means as part of the flow regulator.

Claims 2, 3 and 5-9 set forth preferred, optional features of the invention.

The invention can also incorporate other optional features which give advantages over the prior art, and these are discussed below.

In prior art low pressure regulators, which allow fairly wide regulation of the volumetric flow set-point, the lowest pressure at which the regulator starts to operate increases with increasing volumetric flow rate. Even at small volumetric flows, the lowest pressure is usually relatively high. The high end pressure also increases with increasing volumetric flow rate set-point.

Because the lowest pressure is high and/or because it depends on the volumetric flow set-point value, the prior art regulators, in order to function, require extra blower energy and possibly a bigger blower; owing to the increase of pressure they tend to cause noise problems;

they impede design, and they cause difficulties in the implementation phase of the installation.

In general, accurate and stepless setting of the volumetric flow in flow regulators at the site of installation is exceedingly difficult and often impossible in practice, particularly if the regulator has been already installed, and the flow rate setting cannot be directly read. prior art regulators also do not allow one to read the throttling pressure with which the regulator impedes the flow; in certain prior art regulator designs one may observe from the outside whether the regulator is within its operating range, but they allow no regulation of the volumetric flow rate.

A prerequisite of mass manufacturing, storage and distribution, and of convenient use of regulators, is that they can be regulated easily and accurately at the site of installation, also after installation. It is important for balancing and inspecting an air conditioning installation that it is possible to observe from outside the regulator which set-point value of volumetric flow has been selected, whether the regulator is within its operating range, and how strongly the regulator throttles the flow.

In addition, the basic construction and the manufacturing technology of the regulator should be such that the required calibration measures are as simple and as few as possible and independent of the setting of volumetric flow.

In regulators known at present, the movement of the regulating member cannot be steplessly limited. Therefore, prior art regulators cannot be used at all for mere balancing based on so-called single pass regulation, which would eliminate the risk of binding of the means. Secondly, prior art regulators cannot be used for restricted and controlled correction. Thirdly, prior art regulators cannot be used in the best possible way in air conditioning installations where the air quantities are varied, e-g. different air quantities in the daytime and during the night.

In prior art regulators, a particular damping means is required to damp oscillations, or hunting, of the regulating member. In some prior art designs, damping of the dashpot type is used. In another prior art regulator, bellows type damping is used. Disadvantages of the damping designs described above are, for instance, that the damping means may in the course of time either bind or be blocked or break, that they require maintenance, and that they may impair accuracy.

In several advantageous embodiments of the invention, the regulating member is a slightly curved plate, The turning angle between the initial and ultimate positions of the regulating member is substantially of the same order at different volumetric flow rates, the differential pressure being the same. The initial and ultimate positions of the regulating member are dependent on the magnitude of the volumetric flow rate, the differential pressure being the same. The flow regulator is advantageously provided with adjustable and/or self-adjusting limiting members to limit the differential pressure range of the flow regulator, the limiting members being disposed to limit the angular movement of the regulating member. The operating range of the flow regulator is also advantageously changeable by changing the effective flow aperture. Similarly, the operating range of the flow regulator is advantageously changeable by means of a shiftable mass producing a countertorque dependent on the position of the regulating member.

The set-point value of one flow regulator of the invention can be regulated in a relatively wide volumetric flow range, e.g. duct velocity 2-8 m/s, without any change of the pressure range in which the flow regulator operates. However, the flow regulator can operate with lower differential pressure, e.g. about 20 Pa, than any regulator known in prior art, where the operating range is 20-200 Pa throughout. In the regulator of the invention, it is possible to make use of a regulating member turning angle of about 90', thus affording, with additional adjustment of the effective flow aperture, a large movement of the regulating member relative to the change of differential pressure, and a relatively wide operating range.

In one regulator of the invention, the volumetric flow rate can be regulated steplessly and simply at the site of installation, even if the regulator has already been installed, simply by turning a control knob on the flow regulator. The volumetric flow rate may be directly read on a scale, as well as the degree in which the regulator throttles the flow, and whether the regulator is within its operating range, i,e. whether the regulator admits the correct air quantity, or too little or too much.

In one flow regulator of the invention, the movement of the regulating member may be limited, or the movement of the regulating member may, if need be, be entirely arrested. Thanks to this characteristic feature, the flow regulator of the invention may also be used in applications such as balancing based merely on so-called single pass regulation. Secondly, the flow regulator may be used for minor controlled correction, and thirdly the flow regulator may successfully be used in air-conditioning installations where centralised alteration of the air flows is desirable.

An embodiment of the invention also requires no separate oscillation inhibiting means, certainly no oscillation inhibitor which would be likely to bind or accumulate dirt or be blocked: as a rule the counterpressure in the duct system is alone enough to keep the regulating member stable. Factors contributing to this favourable feature are in the first place that the regulating member is slightly curved and that the regulating does not nearly completely close the passage in any position. As a result, the air is enabled to flow past on all sides of the regulating member even when the regulating member is in the "closed" position. Further factors contributing to the favourable feature just described are for instance the size and shape of the regulating member, the location of the turning axis of the regulating member if the regulating member is slightly curved, the flow regulator can be made accurate, silent, and a slightly curved regulating member like this moves smoothly from one end position to the other.

The invention is described in detail, referring to an advantageous embodiment of the invention presented in the figures of the drawing attached, but to which the invention is not meant to be exclusively confined.

Fig. 1 presents an advantageous embodiment of the invention in partly sectioned elevational view.

Fig. 2 shows the section along the line II-II in Fig. 1.

Fig. 3A presents in elevational view the initial and ultimate positions of the regulating member of the flow regulator at high volumetric flow rate.

Fig. 3B presents in elevational view the initial and ultimate positions of the regulating member of the flow regulator at low volumetric flow rate.

Fig. 4A presents the effective flow aperture of the flow regulator of the invention at its smallest, with the regulating member so regulated that the effective flow aperture is large, viewed in the direction of flow.

Fig. 4B presents the effective flow aperture of the flow regulator of the invention at its smallest, with the regulating member so regulated that the effective flow aperture is snall, viewed in the direction of flow.

Fig. 4C illustrates in elevational view the changing of the effective flow aperture of the flow regulator in a flow passage with variable cross section.

Fig. 4D illustrates in elevational view the changing of the effective flow aperture of the flow regulator by means of a separate regulating member.

Fig. 5 presents the principle of limiting the differential pressure range of the flow regulator, in a schematic elevational view.

Fig. 6 shows a detail of Fig. 5 viewed in the direction 5A.

Fig. 7 shows a way of changing the operating range of the flow regulator of the invention, in a schematic elevational view.

Fig. 8 presents the flow regulator as in Fig. 1, viewed in the direction of the cover of the protective case, said cover being removed.

In the embodiment of Figs 1 and 2, the constant flow regulator of the invention has been generally indicated by reference numeral 10. The regulator 10 comprises an envelope 11 and a regulating member 12 disposed within the envelope 11. In this embodiment, the regulating member 12 is a curved flap-like regulating member composed of two overlapping curved flaps 12a and 12b. The regulating member 12 is attached to a turnable shaft 13 by the aid of a regulating and fixing nut 14 and a combined sleeve, regulating and fixing nut 16. The shaft 13 is rotatably carried by bearings 15 and 18 in the envelope 11. The regulating member 12 turns by effect of the air flowing in the flow passage confined by the envelope 11, and the countertorque generated by a mass or weight 23 is disposed to set the regulating member 12 in a position producing the requisite throttling. Thê weight 23 is integrally connected with the regulating member 12 by means of the sleeve, control and fixing nut 16 and by a member 19 and cover 20 rotatably attached thereto, and it rotates along with the turning of the regulating menber 12. The shaft 13 is installed horizontally by means of a balance and a levelling ball 31 in a protective casing 32.

In this embodiment, the operating range of the constant flow regulator 10, as regards volumetric flow rate, can be changed by turning the regulating knob 24, thereby changing the size of the flap-like regulating member 12 and simultaneously the effective flow aperture, the location of the weight 23 and the initial and ultimate positions of the regulating member 12. The halves 12a and 12b of the regulating member 12 move in different directions relative reference to each other on the shaft 13, by effect of the different-handed threads on the shaft 13 and in the regulating nuts 14,16. One end of the shaft 13 is laterally fixed in the bearing 15, whereby the effect of the adjustment also causes the member 19, which is connected to the half 12b of the closing member 12 by means of the sleeve 16, and the cover 20, attached to said member 19, to move in the direction of the shaft 13. A gear 22 attached to the cover 20, is in contact with the shaft 13, and is rotated by grooves formed by a pinion rack on the shaft 13 during the axial movement of the member 19, the gear 22 thereby shifting the weight 23 by means of a rack 34. The cover 20 acts as a support member for the weight 23.

In Figures 3A and 3B it is observed that at high volumetric flow rate, at the smallest differential pressure of the operation range, the regulating member 12 is in a more horizontal position than at a small volumetric flow rate at the corresponding differential pressure. Similarly, it is observed that at a small volumetric flow rate at the highest differential pressure of the operation range, the regulating member 12 is in a more vertical position than at a large volumetric flow at the corresponding differential pressure,

The position of the regulating member 12 at the highest volumetric flow rate and at the smallest differential pressure of the operation range advantageously deviates about 90° from the position of the regulating member 12 at the smallest volumetric flow rate and the highest differential pressure of the operation range. in contrast, the turning angle $\Phi_2$ Is substantially of the same order as the respective turning angle $\Phi_1$ for high volumetric flow rate when the differential pressure is the same. Thus, in the regulator of the invention the rocation angle $\Phi_1$,

$\Phi_2$ of the regulating member 12 for the minimum and maximum differential pressure is substantially of the same order at different volumetric flow rates. At the same minimum and maximum values of the differential preesure $\Delta p$, the angle of rocation $\Phi_1$, $\Phi_2$ is advantageouely about 60°.

In the embodiment of Figs 4A and 4B, in the flow regulator 10 of the invention the effective flow aperture 37 is changed by regulating the size of the regulating member 12. In this embodiment, the size of the effective flow aperture 37 is changed by moving the halves 12a and 12b of the flap-resembling regulating member 12 in the manner indicated by the arrow A in Fig. 4A.

In the embodiment of Fig. 4C, the effective flow aperture 37 is changed by moving the regulating member 12 in the flow passage 11,11a with variable cross-section as indicated by the arrow B, in other words, by shifting the regulating member 12 in the direction of flow.

In the embodiment of Fig. 4D, the effective flow aperture 37 is changed by regulating the flow aperture by the aid of a separace regulating member 36, consisting of one or several parts, placed in the flow passage. The shafts of the regulating members 36 are denoted by the reference numeral 35. The regulating members 36 may be rotated around the axes 35 as indicated by arrows C.

In the flow regulator 10 of the invention, the differential pressure range is limited by limiting members 25 and 26a, 26b. When the limiters 26a and 26b are moved as indicated by arrows D in Fig. 5, the movement of the regulating member 12 is limited. The limiters 26a and 26b are advantageously self-regulating limiting members in accordance with the volumetric flow rate that has been selected, as shown in Figure 6. The limiters 26a and 26b have bevelled faces in that case. The limiters 26a and 26b regulate themselves when a limiter pin 25 moves as the volumetric flow rate is regulated, in the manner indicated by the arrow E in Figure 6. The movement of the regulating member 12 of the constant flow regulator 10 may also be arrested totally or partially with the aid of the adjustable limiters 26a and 26b. The limiter pin 25 and the adjusting scale 39 on the protective case 32 indicate the differential pressure $\Delta p$ acting across the constant flow regulator 10. When the limiter pin 25 touches the limiter 26a, the differential pressure $\Delta p$ is at the lowest, and at the limiter 26b it is at the highest (Figure 6). When the limiter pin 25 is between the limiters 26a and 26b, the flow regulator is in the operating range; if not, either too much or too little air is admitted.

As shown in Figure 7, the operating range of the flow regulator 10 can be changed by shifting the weight 23 as indicated by the arrow F.

The weight 23 and the limiting members 25 and 26a, 26b automatically assign different initial and ultimate positions to the regulating member 12 at different volumetric flow rates.

As shown in Figures 1, 2 and 8, in the constant flow regulator 10 of the invention, the effect of gravity can be made the same independent of the orientation of the regulator 10 by means of the fixable cover 20 which is adjustable with reference to the shaft 13 of the regulating member 12, of a ball case 29 on the protective casing 32, and of the ball 30 moving in the case 29, During manufacture, the regulator 10 is balanced by a balancing weight 38, without the weight 23 being connected to the regulating member 12, i.e. without any countertorque. The ball 30 and the scale 40 on the case 29 show the position of the regulator 10. The cover 20 is turned to a position corresponding to the position indicated by the ball 30 using a scale 41 on the cover 20, and is locked by a set screw 21. The shaft 13 is installed horizontally by means of a level and the levelling ball 31.

In the foregoing only certain advantageous embodiments of the invention have been presented, and it is obvious that it is not meant to confine the invention exclusively to circular cross-section ducts.

## Claims

1. A method of setting a flow regulator for gaseous substances, particularly for air in air-conditioning and ventilation installations, for maintaining the volumetric flow rate of the gaseous substance at a desired magnitude with sufficient accuracy when the differential pressure ($\Delta p$) acting across the flow regulator (10) varies within given limits, the flow regulator (10) comprising an envelope (11) and a regulating member (12) turnable about an axis (13) and disposed in a flow passage confined by the envelope (11), the regulating member (12) turning progressively crosswise to the direction of flow with increasing differential pressure, and a weight (23) for applying a countertorque to the regulating member (12) which varies in accordance with the rotary position of the regulating member (12), whereby the torque produced by the gaseous substance on the regulating member (12) and the countertorque cause the regulating member (12) to assume an equilibrium position in which it provides the pressure drop required to maintain the volumetric flow at a predetermined magnitude, characterised in that the regulating member (12) is balanced without rotary connection to the weight (23), and subsequently the weight (23) is set by rotating it relative to the regulating member (12) around the regulating member axis (13) and by making a rotary connection between the weight (23) and the regulating member (12), whereby the weight (23) can be set in the same rotary position relative to the horizontal, whatever the orientation of the flow regulator (10), and the countertorque made independent of the orientation of the flow regulator (10).

2. The method of Claim 1, wherein the flow regulator is installed with the regulating member axis (13) horizontal.

3. The method of Claim 1 or 2, wherein a separate balancing weight (38) is used in order to balance the regulating member (12),

4. A flow regulator for gaseous substances, particularly for air in air-conditioning and ventilation installations, for maintaining the volumetric flow rate of the gaseous substance at a desired magnitude with sufficient accuracy when the differential pressure (Δp) acting across the flow regulator (10) varies within given limits, the flow regulator (10) comprising an envelope (11) and a regulating member (12) turnably disposed in a flow passage confined by the envelope (11), the regulating member (12) turning progressively crosswise to the direction of flow with increasing differential pressure, and further comprising a weight (23) supported by a support member (20) and applying a countertorque to the regulating member (12) which varies with the position of the regulating member (12), whereby the torque produced by the gaseous substance on the regulating member (12) and the countertorque cause the regulating member (12) to assume an equilibrium position in which it provides the pressure drop required for maintaining the volumetric flow at a predetermined magnitude, characterised in that the support member (20) is connected to the regulating member (12) in such a way that the angular setting of the support member (20) relative to the regulating member (12) can be adjusted to enable the flow regulator to be installed in different orientations without affecting the countertorque provided by the weight (23).

5. The flow regulator of Claim 4, and comprising pointer means (30) for indicating the orientation in which the flow regulator (10) is installed.

6. The flow regulator of Claim 5, wherein the pointer means is a ball (30) travelling by gravity along a track (29).

7. The flow regulator of Claim 5 or 6, wherein the pointer means (30) is provided with a scale (40).

8. The flow regulator of any of Claims 5 to 7, wherein the support member (20) is provided with a scale (41) for association with the pointer means (30).

9. The flow regulator of any of Claims 4 to 9, and comprising a levelling means (31, 32) for the regulating member axis (13).

**Patentansprüche**

1. Verfahren zum Einstellen eines Strömungsreglers für gasförmige Substanzen, insbesondere für Luft in Klimaanlagen und Belüftungseinrichtungen, um die volumetrische Strömungsgeschwüdigkeit der gasförmigen Substanz mit ausreichender Genauigkeit auf einer gewüschten Größe zu halten, wenn der über den Strömungsregler (10) wirkende Differentialdruck (Δp) innerhalb gegebener Grenzen verändert wird, wobei der Strömungsregler (10) ein Gehäuse (11) und ein Regelglied (12) umfaßt, das um eine Achse (13) drehbar und in einem vom Gehäuse (11) begrenzten Strömungsdurchtritt angeordnet ist, wobei das Regelglied (12) mit ansteigendem Differentialdruck sich schrittweise quer zur Strömungsrichtung dreht und wobei ein Gewicht (23) zum Aufbringen eines Gegenstromes zum Regelglied (12) vorgesehen ist, der je nach Drehlage des Regelgliedes (12) veränderlich ist, wodurch das von der gasförmigen Substanz auf das Regelglied (12) erzeugte Moment und der Gegenstrom das Regelglied (12) zwingen, eine Gleichgewichtslage einzunehmen, in der es jenen Druckabfall gibt, der zur Aufrechterhaltung der volumetrischen Strömung einer vorbestimten Größe notwendig ist, dadurch gekennzeichnet, daß das Regelglied (12) ohne Drehverbindung mit dem Gewicht (23) ausgeglichen ist und infolgedessen das Gewicht (23) durch Verdrehen relativ zum Regelglied (12) um die Achse (13) des Regelgliedes eingestellt wird, und indem mun eine Drehverbindung zwischen dem Gewicht (23) und dem Regelglied (12) herstellt, wodurch das Gewicht (23) in der gleichen Drehlage relativ zur Horizontalen eingestellt werden kann, wie immer auch die Ausrichtung des Strömungsreglers (10) ist, und der Gegenstrom unabhängig von der Ausrichtung des Strömungsreglers (10) gemacht wird.

2. Verfahren nach Anspruch 1, dadurch gekennzeichnet, daß der Strömungsregler mit horizontaler Achse (13) für das Regelglied angeordnet wird.

3. Verfahren nach Anspruch 1 oder 2, dadurch gekennzeichnet, daß ein getrenntes Ausgleichsgewicht (35) verwendet wird, um das Regelglied (12) auszugleichen.

4. Strömungsregler für gasförmige Substanzen, insbesondere für die Luft in Klimaanlagen und Belüftungseinrichtungen, um die volumetrische Strömungsgeschwindigkeit der gasfömigen Substanz mit ausreichender Genauigkeit auf einer gewünschten Höhe zu halten, wenn der über den Strömungsregler (10) wirkende Differentialdruck (Δp) innerhalb gegebener Grenzen verändert wird, wobei der Strömungsregler (10) ein Gehäuse (11) und ein Regelglied (12) umfaßt, das in einem vom Gehäuse (11) begrenzten Strömungsdurchtritt angeordnet ist, wobei das Regelglied (12) mit steigendem Differentialdruck sich schrittweise quer zur Strömungsrichtung verdreht, und ferner ein Gewicht (23) umfaßt, das von einem Träger (20) gehalten wird und einen Gegenstrom auf das Regelglied (12) aufbringt, der sich mit der Lage des Regelgliedes (12) ändert, wodurch das durch die gasfbrmige Substanz auf das Regelglied (12) ausgeübte Moment und der Gegenstrom das Regelglied (12) zwingen, einen Ausgleichslage einzunehmen, in der es den Druckabfall zur Aufrechterhaltung der volumetrischen Strömung auf einer bestimmten Größe hervorruft, dadurch gekennzeichnet, daß das Tragglied (20) mit dem Regelglied (12j derart verbunden ist, daß die Winkeleinstellung des Traggliedes (20) relativ zum Regelglied (12) eingestellt werden kann, um zu ermöglichen, daß der Strömungsregler mit verschiedenen Ausrichtungen angeordnet werden kann, ohne den vom Gewicht (23) hevorgerunfenen Gegenstrom zu beeinflussen.

5. Strömungsregler nach Anspruch 4, dadurch gekennzeichnet, daß er eine Anzeigeeinrichtung (30) zur Anzeige der Ausrichtung, in der der Strömungsregler (10) angeordnet ist, aufweist.

6. Strömungsregler nach Anspruch 5, dadurch gekennzeichnet, daß die Anzeigeeinrichtung eine Kugel (30) ist, die aufgrund von Schwerkraft entlang einer Bahn (29) wandert.

7. Strömungsregler nach Anspruch 5 oder 6, dadurch gekennzeichnet, daß die Anzeigeeinrichtung (30) mit einer Skala (40) versehen ist.

8. Strömungsregler nach einem der Ansprüche 8 bis 7, dadurch gekennzeichnet, daß das Tragglied (20) mit einer Skala (41) für die Zuordnung mit der Anzeigeeinrichtung (30) versehen ist.

9. Strömungsregler nach einem der Ansprüche 4 bis S, dadurch gekennzeichnet, daß er eine Nivelliereinstellung (31, 32) zur Einstellung der Gliedachse (13) umfaßt.

## Revendications

1. Procédé de réglage d un régulateur de débit pour substances gazeuses, en particulier pour de l'air dans des installations de climatisation et de ventilation, pour maintenir le débit volumétrique de la substance gazeuse à une valeur désirée avec une précision suffisante lorsque la pression différentielle (Δp) agissant de part et d'autre du régulateur de débit (10) varie dans des limites données, le régulateur de débit (10) comprenant une enveloppe (11) et un organe régulateur (12) pouvant tourner autour d'un axe (13) et disposé dans un passage d'écoulement délimité par l'enveloppe (11), l'organe régulateur (12) tournant progressivement transversalement par rapport à la direction d'écoulement lorsque la pression différentielle augmente, et un poids (23) pour appliquer un couple antagoniste à l'organe régulateur (12) qui varie selon la position de rotation de l'organe régulateur (12), de sorte que le couple produit par la substance gazeuse, appliqué à l'organe régulateur (12) et le couple antagoniste font prendre à l'organe régulateur (12) une position d'équilibre dans laquelle il fournit la chute de pression nécessaire pour maintenir le débit volumétrique à une valeur prédéterminée, caractérisé en ce qu'on équilibre l'organe régulateur (12) sans liaison de rotation avec le poids (23), et qu'ensuite on positionne le poids (23) en le faisant tourner par rapport à l'organe régulateur (12) autour de l'axe (13) de l'organe régulateur et en réalisant une liaison de rotation entre le poids (23) et l'organe régulateur (12), de sorte qu'on peut positionner le poids (23) dans la même position de rotation par rapport à l'horizontale, quelle que soit l'orientation du régulateur de débit (10), et qu'on peut rendre le couple antagoniste indépendant de l'orientation du régulateur de débit (10).

2. Procédé selon la revendication 1, caractérisé en ce qu'on monte le régulateur de débit avec l'axe (13) dudit régulateur de débit horizontal.

3. Procédé selon la revendication 1 ou 2, caractérisé en ce qu'on utilise un poids d'équilibrage (38) séparé pour équilibrer l'organe régulateur (12).

4. Régulateur de débit pour substances gazeuses, en particulier pour de l'air dans des installations de climatisation et de ventilation, pour maintenir le débit volumétrique de la substance gazeuse à une valeur désirée avec une précision suffisante lorsque la pression différentielle (Δp) agissant de part et d'autre du régulateur de débit (10) varie dans des limites données, le régulateur de débit (10) comprenant une enveloppe (11) et un organe régulateur (12) disposé de façon à pouvoir tourner dans un passage d'écoulement délimité par l'enveloppe (11), l'organe régulateur (12) tournant progressivement transversalement par rapport à la direction d'écoulement lorsque la pression différentielle augmente, et comprenant en outre un poids (23) supporté par un élément de support (20) et appliquant un couple antagoniste à l'organe régulateur (12) qui varie avec la position de l'organe régulateur (12), de sorte que le couple produit par la substance gazeuse, appliqué à l'organe régulateur (12) et le couple antagoniste font prendre régulateur (12) une position d'équilibre dans laquelle il fournit la chute de pression nécessaire pour maintenir le débit volumétrique à une valeur prédéterminée, caractérisé en ce que l'élément de support (20) est relié à l'organe régulateur (12) de telle façon que le positionnement angulaire de l'élément de support (20) par rapport à l'organe régulateur (12) peut être ajusté pour permettre de monter le régulateur de débit dans différentes orientations sans affecter le couple antagoniste engendré par le poids (23).

5. Régulateur de débit selon la revendication 4, caractérisé en ce qu'il comprend un ensemble indicateur (30) pour indiquer l'orientation dans laquelle le régulateur de débit (10) est monté.

6. Régulateur de débit selon la revendication 5, caractérisé en ce que l'ensemble indicateur est une bille (30) se déplaçant par gravité le long d'un chemin de roulement (29).

7. Régulateur de débit selon la revendication 5 ou 6, caractérisé en ce que l'ensemble indicateur (30) comporte une échelle graduée (40).

8. Régulateur de débit selon l'une quelconque des revendications 5 à 7, caractérisé en ce que l'élément de support (20) comporte une échelle graduée (41) devant être associée à l'ensemble indicateur (30).

9. Régulateur de débit selon l'une quelconque des revendications 4 à 9, caractérisé en ce qu'il comprend un ensemble de réglage de niveau horizontal (31, 32) pour l'axe (13) de l'organe régulateur.

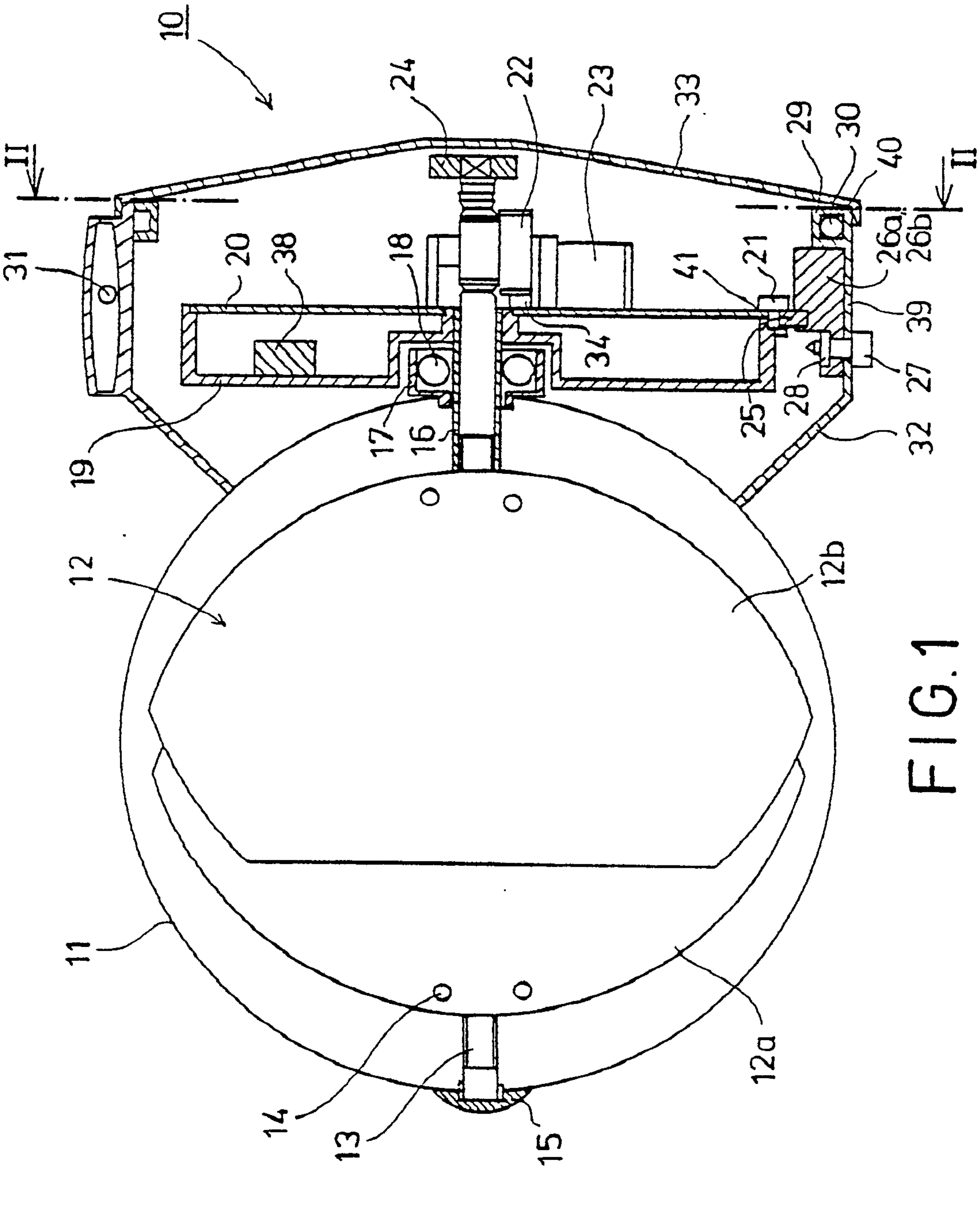
10
II
II
11
12
12a
12b
13
14
15
16
17
18
19
20
21
22
23
24
25
26a
26b
27
28
29
30
31
32
33
34
38
39
40
41

FIG.1

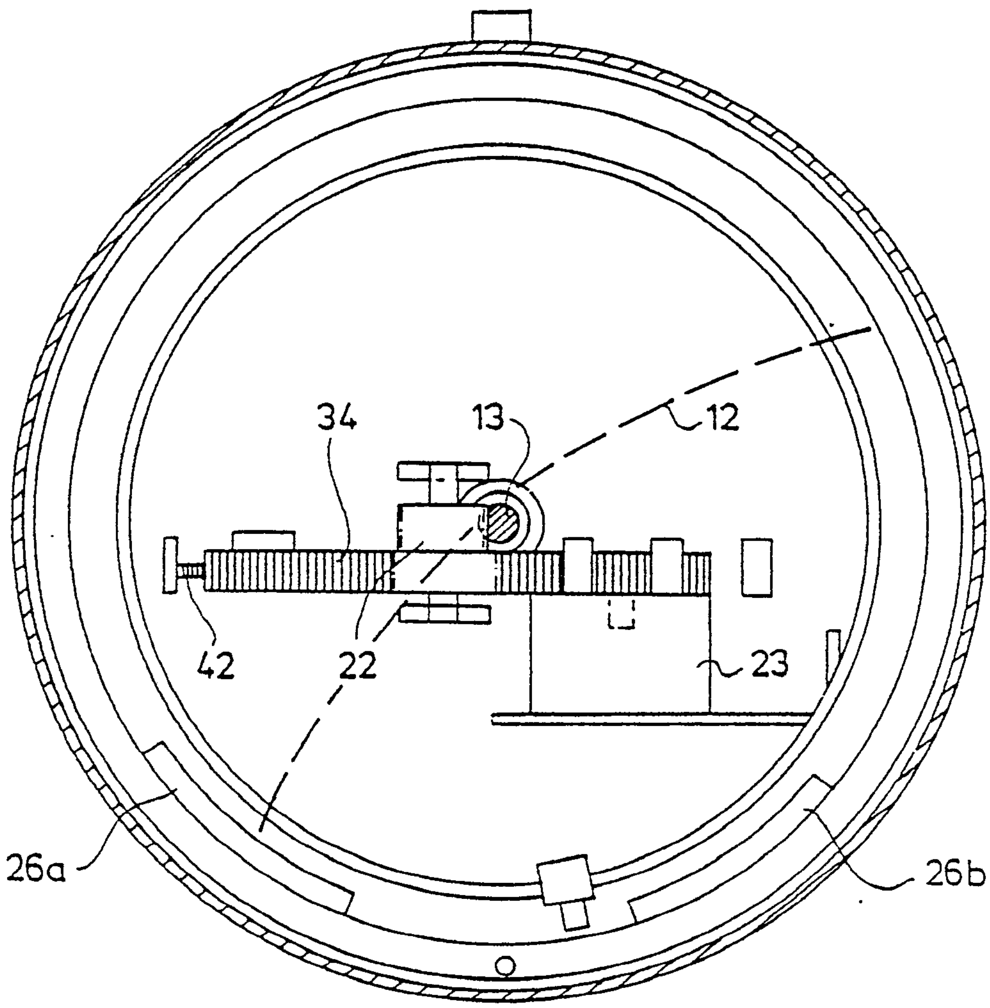


FIG. 2

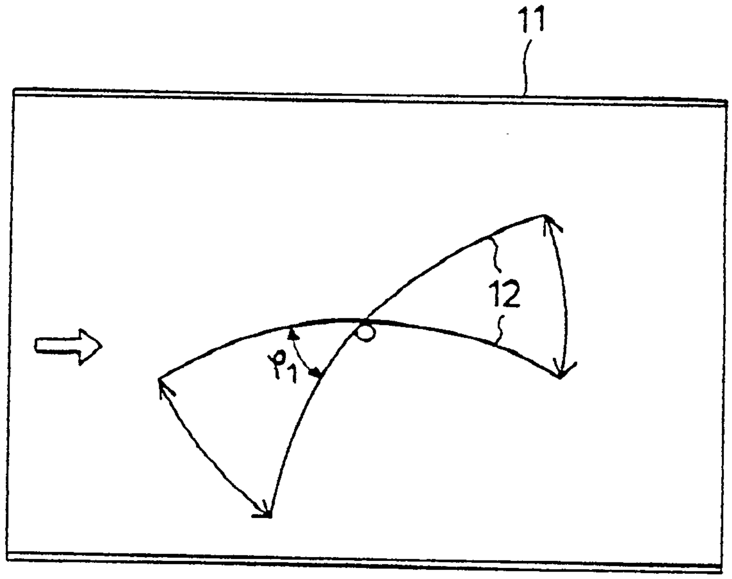


FIG. 3A

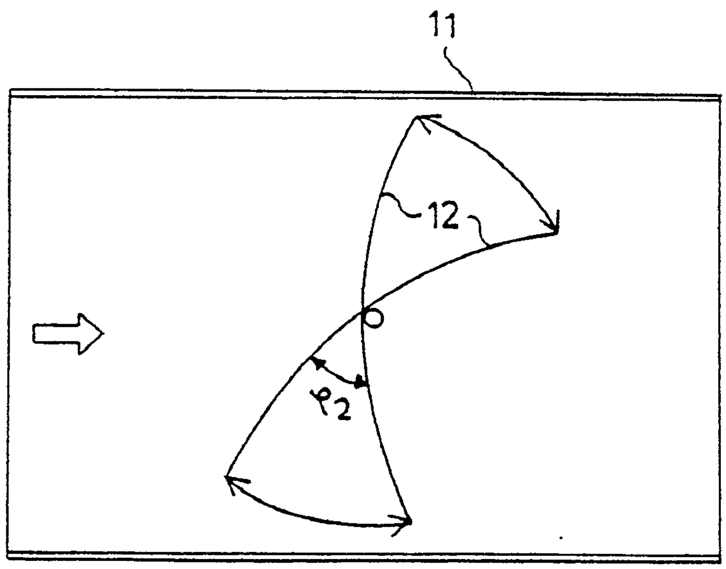


FIG. 3B

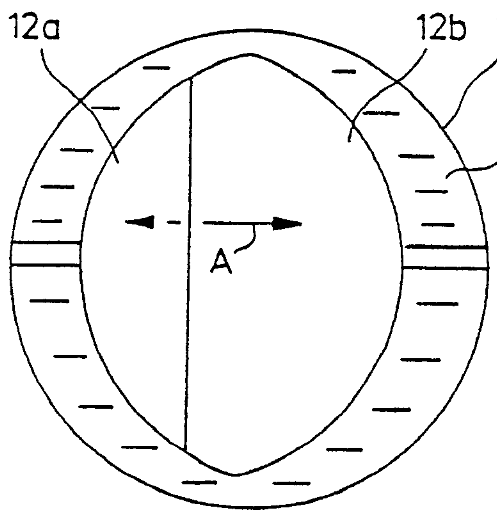


FIG. 4A

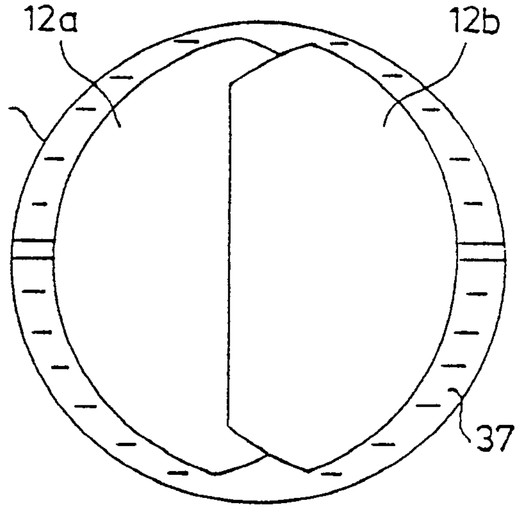


FIG. 4B

FIG. 4C

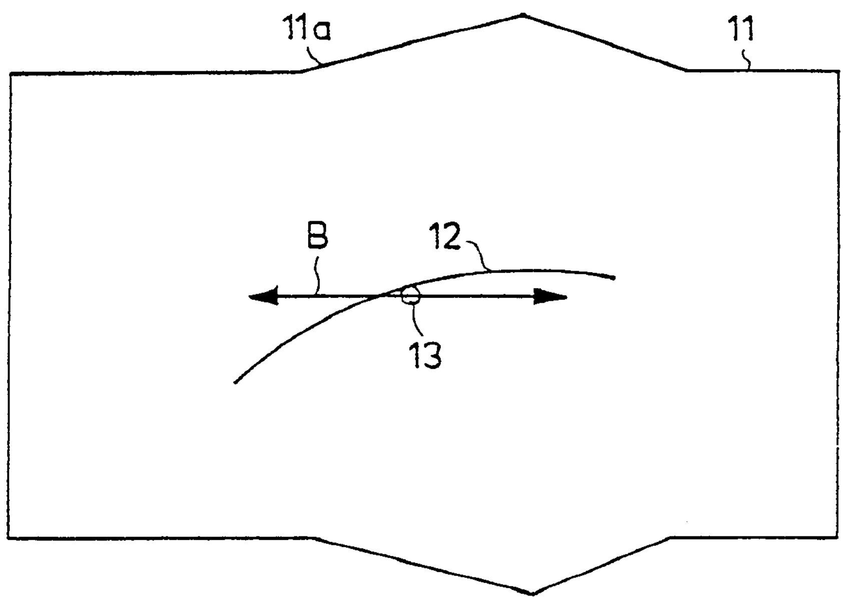


FIG. 4D

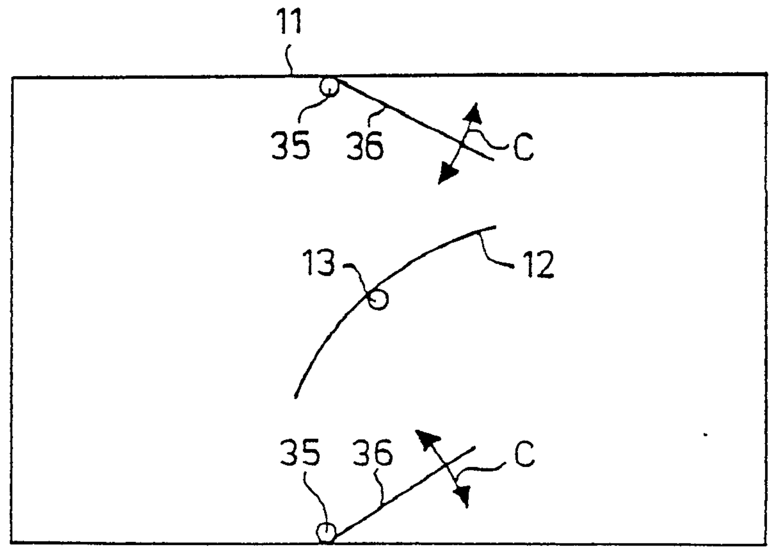

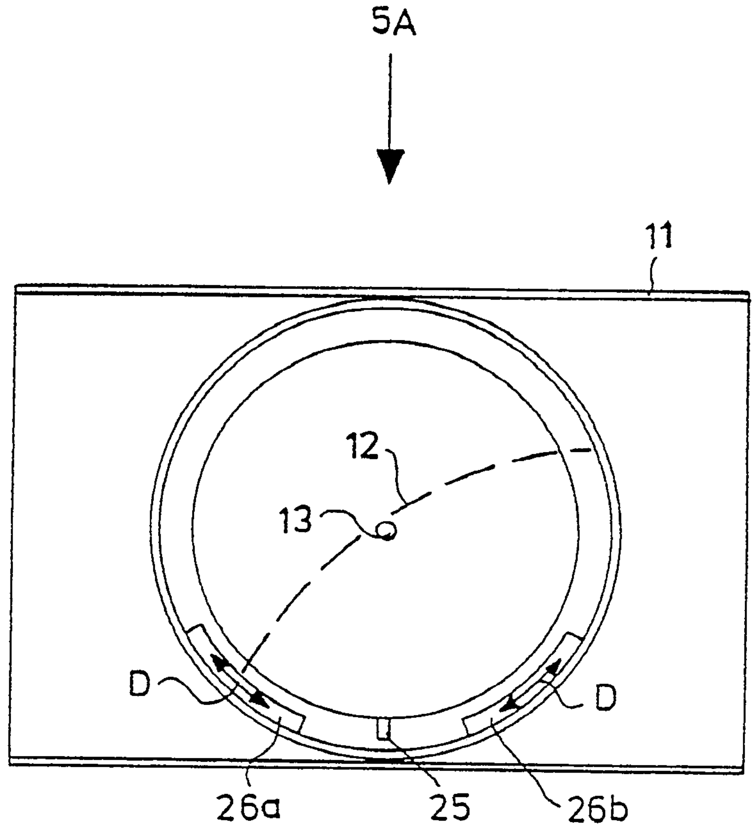


FIG. 5

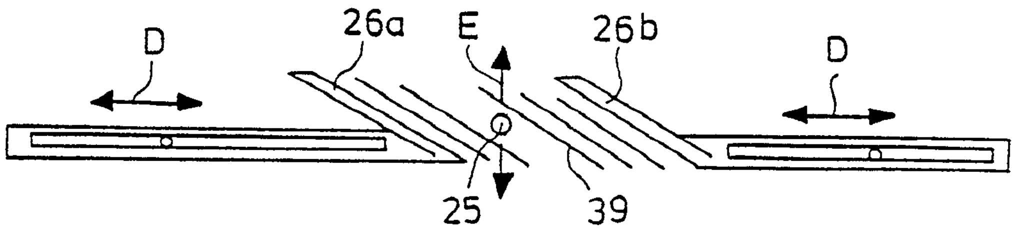


FIG. 6

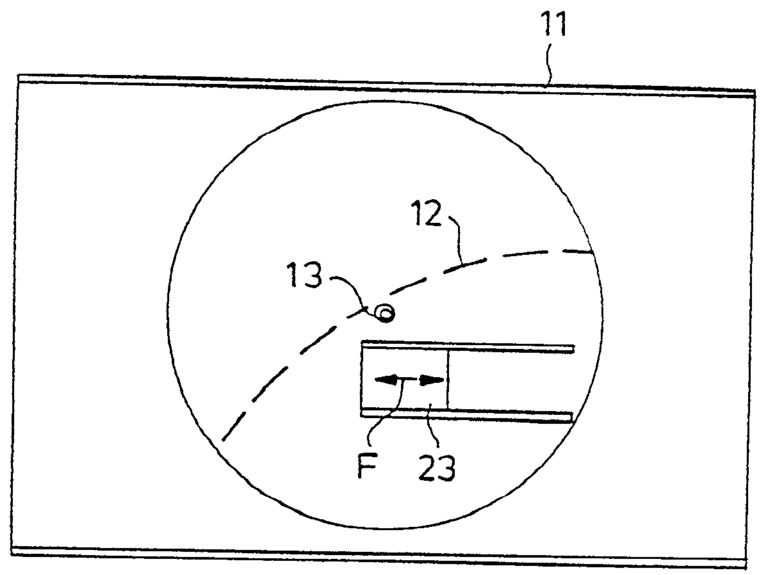


FIG. 7

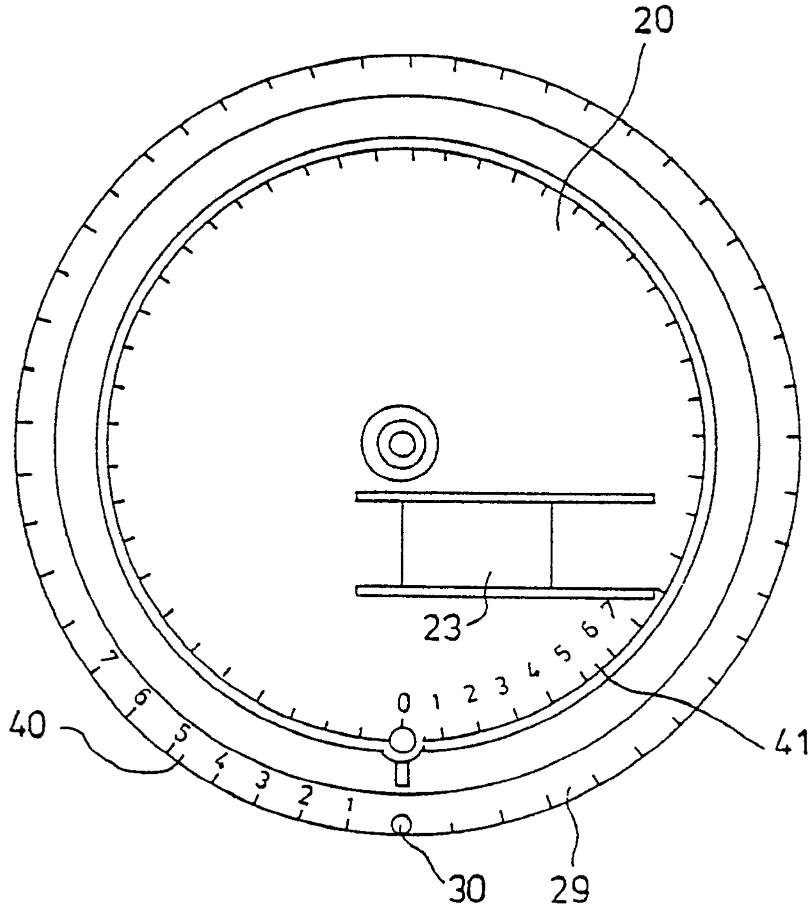


FIG.8